# EUROPÄISCHE PATENTSCHRIFT

(11) **EP 3 999 390 B1**
(45) Veröffentlichungstag und Bekanntmachung des Hinweises auf die Patenterteilung: **03.07.2024**
(21) Anmeldenummer: 20804507.0
(22) Anmeldetag: 10.11.2020
(51) Int. Cl.: B60T 8/176, B60W 30/18, B60W 30/184, F16H 61/18, B60W 10/184, B60W 10/11

(54) **VERFAHREN ZUM BETREIBEN EINES FAHRZEUGS SOWIE FAHRZEUG**
METHOD FOR OPERATING A VEHICLE, AND VEHICLE
PROCÉDÉ DE FONCTIONNEMENT D'UN VÉHICULE ET VÉHICULE

(30) Priorität: 10.12.2019 DE 102019133643
(43) Veröffentlichungstag der Anmeldung: 25.05.2022
(73) Patentinhaber: Audi AG, 85045 Ingolstadt (DE)
(72) Erfinder: SZEPPAT, Enrico, 09328 Lunzenau OT Göritzhain (DE); GUNDLACH, Lutz, 85049 Ingolstadt (DE)
(74) Vertreter: Bierschneider, Walter
(86) Internationale Anmeldenummer: PCT/EP2020/081571
(87) Internationale Veröffentlichungsnummer: WO 2021/115700

(56) Entgegenhaltungen:
- DE-A1-102016 200 819
- DE-A1-102017 211 656
- US-A1- 2015 204 441
- US-B1- 6 356 188

## Beschreibung

Die Erfindung betrifft ein Verfahren zum Betreiben eines Fahrzeugs gemäß dem Oberbegriff von Patentanspruch 1. Außerdem betrifft die Erfindung ein Fahrzeug.

Die JP 2017125548 offenbart eine Gangwechsel-Steuervorrichtung eines Fahrzeugs. Die Gangwechsel-Steuervorrichtung stellt eine vorgeschriebene Gangwechselstufe ein, wenn eine Fahrzeuggeschwindigkeit eine vorgeschriebene Fahrzeuggeschwindigkeit oder eine niedrigere Geschwindigkeit erreicht und umfasst auch eine Steuerung zum Steuern eines gestuften Automatikgetriebes. In dem Fall, in dem eine Verzögerung des Fahrzeugs, wenn die Fahrzeuggeschwindigkeit die vorgeschriebene Fahrzeuggeschwindigkeit erreicht oder niedriger ist, größer als die voreingestellte vorgeschriebene Verzögerung ist, verhindert die Steuerung ein Runterschalten in die vorgeschriebene Gangwechselstufe.

Des Weiteren ist der EP 3 112 204 B1 ein Fahrzeug mit Allradantrieb mit einer Kupplungssteuerungsvorrichtung als bekannt zu entnehmen. DE102017211656 A1 offenbart ein Betriebsverfahren für ein automatisches Getriebe eines Kraftfahrzeugs, das ein Abheben eines Fahrzeugrads erfasst.

Darüber hinaus sind aus dem allgemeinen Stand der Technik sogenannte Anti-Blockiersysteme von Fahrzeugen bekannt. Die Anti-Blockiersysteme werden üblicherweise auch als automatische Blockierverhinderer bezeichnet. Die Anti-Blockiersysteme dienen zum Durchführen von Bremsungen unter zumindest nahezu maximaler Ausnutzung eines Kraftschlusses zwischen einem jeweiligen Reifen eines Rads eines jeweiligen Fahrzeugs und einer Fahrbahn, während sich das jeweilige Fahrzeug entlang der Fahrbahn bewegt. Die zuvor genannten Bremsungen werden auch als Anti-Blockier-Bremsungen bezeichnet. Bei einer solchen Anti-Blockier-Bremsung wird das jeweilige Rad des Fahrzeugs mittels einer jeweiligen Bremseinrichtung des jeweiligen Fahrzeugs abgebremst, indem die Bremseinrichtung auf das jeweilige Rad ein Bremsmoment aufbringt. Dabei wird mittels einer insbesondere elektronischen Regelungseinrichtung des Anti Anti-Blockiersystems das von der Bremseinrichtung auf das Rad aufzubringende Bremsmoment zumindest zeitweise, das heißt zumindest vorübergehend auf einen vorgebbaren Wert begrenzt, um dadurch ein Blockieren des Rads relativ zu der Fahrbahn zumindest zeitweise zu verhindern.

Diese Begrenzung des Bremsmoments erfolgt beispielsweise in Abhängigkeit von wenigstens einem Regelwert, welcher einen Schlupf des Rads relativ zu der Fahrbahn charakterisieren kann. Eine einem solchen Anti-Blockiersystem zugrundeliegende Idee ist es beispielsweise, dass maximale Bremsverzögerungen in Abhängigkeit von Fahrbahnzustand und Reifen des Rads bei bestimmten Schlupfwerten erreicht werden können. Durch Begrenzen des Bremsmoments wird das Bremsmoment derart eingestellt, dass das Bremsmoment den Wert nicht überschreitet und dass der Schlupf zumindest während eines überwiegenden Teils der Anti-Blockierbremsung möglichst nahe bei einem für eine möglichst hohe Bremsverzögerung optimale Schlupfwert liegt, sodass einerseits eine sehr starke Verzögerung beziehungsweise Abbremsung des Fahrzeugs realisiert und andererseits jedoch ein Blockieren des Rads verhindert werden kann. Dadurch bleibt das Fahrzeug beispielsweise lenkbar und stabil, da das Rad, welches nicht blockiert, noch Seitenführungskräfte aufnehmen kann.

Aufgabe der vorliegenden Erfindung ist es, ein Verfahren zum Betreiben eines Fahrzeugs und ein Fahrzeug zu schaffen, sodass Schäden des Fahrzeugs und/oder unangenehme Geräusche vermieden werden können.

Diese Aufgabe wird erfindungsgemäß durch ein Verfahren mit den Merkmalen des Patentanspruchs 1 sowie durch ein Fahrzeug mit den Merkmalen des Patentanspruchs 6 gelöst. Vorteilhafte Ausgestaltungen mit zweckmäßigen Weiterbildungen der Erfindung sind in den übrigen Ansprüchen angegeben.

Ein erster Aspekt der Erfindung betrifft ein Verfahren zum Betreiben eines Fahrzeugs während einer Fahrt des Fahrzeugs, wobei das Fahrzeug vorzugsweise als Kraftfahrzeug, insbesondere als Kraftwagen, ausgebildet ist. Während der Fahrt bewegt sich das Fahrzeug entlang einer Fahrbahn. Beispielsweise wird das Fahrzeug während der Fahrt entlang der Fahrbahn gefahren. Das Fahrzeug weist dabei wenigstens ein Getriebe und wenigstens eine Bremseinrichtung auf, mittels welcher das Fahrzeug abgebremst werden kann. Insbesondere weist das Fahrzeug wenigstens ein Rad auf, welches mittels der Bremseinrichtung abgebremst werden kann, um hierdurch das Fahrzeug, insbesondere insgesamt, abzubremsen. Das Getriebe weist wenigstens ein formschlüssiges Schaltelement auf, welches beispielsweise als eine Klauenkupplung beziehungsweise als eine Schaltklaue ausgebildet sein kann.

Das Schaltelement kann beispielsweise grundsätzlich, insbesondere relativ zu einem Getriebegehäuse des Getriebes und/oder translatorisch, zwischen wenigstens einer Entkoppelstellung und wenigstens einer Koppelstellung bewegt werden. In der Koppelstellung befindet sich das Schaltelement beispielsweise in formschlüssigem Zusammenwirken mit wenigstens einem weiteren Bauelement des Getriebes. Das Schaltelement kann sich beispielsweise um eine Drehachse relativ zu dem Getriebegehäuse drehen, wobei insbesondere vorgesehen sein kann, dass sich das Schaltelement während der Fahrt um die Drehachse relativ zu dem Getriebegehäuse dreht. In der Koppelstellung ist das Schaltelement formschlüssig mit dem weiteren Bauelement gekoppelt, sodass sich das Schaltelement und das weitere Bauelement dann gemeinsam um die Drehachse relativ zu dem Getriebegehäuse drehen beziehungsweise drehen können. In der Entkoppelstellung ist ein formschlüssiges Zusammenwirken des Schaltelements mit dem weiteren Bauelement aufgehoben, sodass das Schaltelement in der Entkoppelstellung nicht formschlüssig mit dem weiteren Bauelement zusammenwirkt beziehungsweise gekoppelt ist. Dann können sich beispielsweise das Schaltelement und das Bauelement um die Drehachse relativ zueinander drehen.

Während der Fahrt des Kraftfahrzeugs wird mittels der Bremseinrichtung eine Anti-Blockier-Bremsung durchgeführt, bei welcher beispielsweise von der Bremseinrichtung auf wenigstens ein Rad des Fahrzeugs ein Bremsmoment zum Abbremsen des Rads und somit zum Abbremsen des Fahrzeugs insgesamt aufbringbar ist beziehungsweise aufgebracht wird. Das Rad ist ein Bodenkontaktelement des Fahrzeugs, welches während der Fahrt in Fahrzeughochrichtung nach unten hin an der Fahrbahn über das Rad abstützbar oder abgestützt ist. Bei der Anti-Blockier-Bremsung wird mittels einer, insbesondere elektronischen, Regelungseinrichtung des Fahrzeugs das von der Bremseinrichtung auf das Rad aufgebrachte beziehungsweise aufzubringende Bremsmoment zum Abbremsen des Rads und somit des Fahrzeugs zumindest zeitweise auf einen vorgebbaren Wert begrenzt, um dadurch ein Blockieren des Rads relativ zu der Fahrbahn zumindest zeitweise zu verhindern. Durch die Regelungseinrichtung des Fahrzeugs und durch die Bremseinrichtung ist somit ein sogenanntes Anti-Blockiersystem beziehungsweise ein sogenannter automatischer Blockierverhinderer gebildet.

Um nun Schäden und/oder unangenehme, unerwünschte Geräusche während der Fahrt, insbesondere während der Anti-Blockier-Bremsung, vermeiden zu können, ist es erfindungsgemäß vorgesehen, dass während der Anti-Blockier-Bremsung wenigstens ein Wert ermittelt wird, welcher auch als Drehzahlwert bezeichnet wird und eine, insbesondere während der Anti-Blockier-Bremsung stattfindende, Veränderung einer Drehzahl des Rads charakterisiert. Beispielsweise charakterisiert der Wert einen Drehzahlgradienten oder der Wert ist ein Drehzahlgradient, welcher die Veränderung der Drehzahl des Rads charakterisiert.

Während der Anti-Blockier-Bremsung wird in Abhängigkeit von dem ermittelten Wert eine grundsätzlich mögliche und beispielsweise mittels eines Aktors bewirkbare, das formschlüssige Zusammenwirken des Schaltelements mit dem weiteren Bauelement bewirkten Bewegung des Schaltelements zumindest vorübergehend, insbesondere aktiv beziehungsweise gezielt, verhindert. Hierunter kann insbesondere Folgendes verstanden werden: Das Getriebe umfasst beispielsweise den zuvor genannten Aktor, mittels welchem beispielsweise das Schaltelement zumindest aus der Entkoppelstellung in die Koppelstellung, insbesondere aktiv, und beispielsweise relativ zu dem weiteren Bauelement bewegt werden kann. Erfindungsgemäß ist es nun vorgesehen, die das formschlüssige Zusammenwirken des Schaltelements mit dem weiteren Bauelement bewirkende Bewegung gezielt zu verhindern, beispielsweise obwohl eine auch als Steuergerät bezeichnet beziehungsweise als Steuergerät ausgebildete, elektronische Recheneinrichtung oder ein Modul einer solchen elektronischen Recheneinrichtung die insbesondere mittels des Aktors zu bewirkende, das formschlüssige Zusammenwirken des Schaltelements mit dem weiteren Bauelement bewirkende Bewegung des Schaltelements anfordert beziehungsweise wünscht. Die Recheneinrichtung ist beispielsweise ein Getriebesteuergerät zum Betreiben, insbesondere Steuern oder Regeln, des Getriebes.

Die das formschlüssige Zusammenwirken des Schaltelements mit dem weiteren Bauelement bewirkende Bewegung wird insbesondere dann und beispielsweise nur dann verhindert, wenn der Wert beziehungsweise die durch den Wert charakterisierte Veränderung der Drehzahl einen beispielsweise vorgebbaren oder vorgegebenen Schwellenwert überschreitet. Insbesondere ist unter der Verhinderung der das formschlüssige Zusammenwirken des Schaltelements mit dem weiteren Bauelement bewirkenden Bewegung Folgendes zu verstehen: Wird beispielsweise mittels der Bremseinrichtung während einer Fahrt des Fahrzeugs eine Anti-Blockier-Bremsung durchgeführt, während welcher der Wert beziehungsweise die Veränderung der Drehzahl des Rads geringer als der Schwellenwert ist oder dem Schwellenwert entspricht, und wird, beispielsweise auf Basis eines Schaltprogramms, von der elektronischen Recheneinrichtung eine insbesondere mittels des Aktors zu bewirkende Bewegung des Schaltelements aus der Entkoppelstellung in die Koppelstellung angefordert, so wird beispielsweise diese von der elektronischen Recheneinrichtung angeforderte Bewegung des Schaltelements aus der Entkoppelstellung in die Koppelstellung zugelassen, das heißt nicht verhindert, da insbesondere dadurch, dass der Wert beziehungsweise die Veränderung der Drehzahl den Schwellenwert nicht überschreitet, darauf rückgeschlossen werden kann, dass es dann, wenn die das formschlüssige Zusammenwirkende bewirkende Bewegung des Schaltelements tatsächlich durchgeführt wird, weder zu Beschädigungen noch zu unerwünschten, unangenehmen Geräuschen kommt. In der Folge wird beispielsweise die das formschlüssige Zusammenwirken bewirkende Bewegung des Schaltelements bewirkt.

Überschreitet jedoch der Wert beziehungsweise die Veränderung der Drehzahl den Schwellenwert, so wird, insbesondere trotz der beschriebenen Anforderung der Bewegung durch die elektronische Recheneinrichtung, die das formschlüssige Zusammenwirken des Schaltelements mit dem weiteren Bauelement bewirkende Bewegung des Schaltelements aus der Entkoppelstellung in die Koppelstellung unterbunden, sodass die von der elektronischen Recheneinrichtung gewünschte beziehungsweise angeforderte Bewegung des Schaltelements tatsächlich nicht stattfindet, sondern unterbleibt beziehungsweise verzögert oder hinausgezögert wird. Hierdurch können Schäden des Fahrzeugs, insbesondere des Getriebes, sowie die Entstehung von übermäßigen, unangenehmen wie beispielsweise von Insassen des Fahrzeugs akustisch wahrnehmbaren Geräuschen vermieden werden. Die Bewegung wird beispielsweise mittels einer elektronischen Steuereinheit verhindert, welche beispielsweise ein zusätzlich zu der elektronischen Recheneinrichtung vorgesehenes, weiteres Steuergerät und/oder als Bremsensteuergerät ausgebildet sein kann. Das Bremsensteuergerät kann die Regelungseinrichtung sein.

Das Schaltelement ist beispielsweise auf einer Welle des Getriebes angeordnet und mit der Welle um die Drehachse relativ zu dem Getriebegehäuse mitdrehbar. Insbesondere kann das Schaltelement, welches beispielsweise als Schaltmuffe ausgebildet ist, drehfest mit der Welle gekoppelt sein. Das Schaltelement kann jedoch in axialer Richtung der Welle relativ zu der Welle und relativ zu dem Getriebegehäuse zwischen der Entkoppelstellung und der Koppelstellung bewegt werden. Das weitere Bauelement ist beispielsweise ein Zahnrad oder eine Schaltverzahnung des Zahnrads, wobei das Zahnrad ein auf der Welle angeordnetes Losrad ist. In der Entkoppelstellung ist das Losrad von der Welle entkoppelt, sodass sich das Losrad und die Welle um die Drehachse relativ zueinander drehen beziehungsweise drehen können. In der Koppelstellung jedoch ist das Losrad über das Schaltelement drehmomentübertragend, insbesondere drehfest, in der Welle gekoppelt, sodass sich in der Koppelstellung das Losrad, das Schaltelement und die Welle gemeinsam um die Drehachse relativ zu dem Getriebegehäuse drehen beziehungsweise drehen können.

Das erfindungsgemäße Verfahren ermöglicht es nun, dann, wenn sich die Drehzahl des Rads und somit beispielsweise eine Drehzahl des Schaltelements übermäßig stark verändert, die das formschlüssige Zusammenwirken des Schaltelements mit dem weiteren Bauelement bewirkende Bewegung des Schaltelements zu vermeiden, sodass Schäden und unerwünschte Geräusche vermieden werden können.

Der Erfindung liegen dabei insbesondere die folgenden Erkenntnisse zugrunde: Eine Anti-Blockier-Bremsung ist ein Sonderfahrzustand, in dem es zu starken Schwingungen des Rads beziehungsweise von Geschwindigkeiten des Rads kommen kann. Beispielsweise kann das Rad seinen Kontakt zu der Fahrbahn infolge oder während der Anti-Blockier-Bremsung kurzzeitig verlieren, wodurch es zu einer starken Änderung der Drehzahl des Rads kommen kann. Ferner ist es denkbar, dass das Rad, nachdem es seinen Kontakt zu der Fahrbahn verloren hat, wieder im plötzlichen Kontakt mit der Fahrbahn kommt, wodurch es ebenfalls zu einer starken Veränderung der Drehzahl des Rads kommen kann. Durch solche starken Veränderungen der Drehzahl des Rads kann es an einem Ausgang des Getriebes zu starken Veränderungen einer Drehzahl des Getriebes und dabei insbesondere der Drehzahl des Schaltelements kommen.

Während sich das Schaltelement in der Entkoppelstellung befindet, dreht sich das Schaltelement beispielsweise relativ zu dem Losrad beziehungsweise umgekehrt, sodass eine Drehzahldifferenz zwischen dem Schaltelement und dem weiteren Bauelement vorliegt. Im Zuge der Bewegung des Schaltelements aus der Entkoppelstellung in die Koppelstellung erfolgt - wie es aus dem allgemeinen Stand der Technik hinlänglich bekannt ist - eine auch als Synchronisierung bezeichnete Synchronisation zwischen dem Schaltelement und dem weiteren Bauelement, wobei durch die Synchronisierung die Drehzahldifferenz zwischen dem Schaltelement und dem Bauelement, insbesondere reibschlüssig, zumindest verringert oder aufgehoben wird, sodass in der Folge das Schaltelement eingelegt beziehungsweise durchgeschaltet und somit in formschlüssiges Zusammenwirken mit dem weiteren Bauelement gebracht werden kann, ohne dass es zu übermäßigen Belastungen des Schaltelements oder des weiteren Bauelements, zu Schäden und zu übermäßigen, als Ratschen wahrnehmbaren Geräuschen kommt. Diese Synchronisierung wird auch als Sperrsynchronisierung bezeichnet. Mittels der Synchronisierung kann sichergestellt werden, dass das Schaltelement, bevor es in formschlüssiges Zusammenwirken mit dem weiteren Bauelement gebracht wird, mit beziehungsweise zu dem weiteren Bauelement synchronisiert wird, insbesondere reibschlüssig, sodass Synchronität zwischen dem Schaltelement und dem weiteren Bauelement herrscht.

Hierunter ist insbesondere zu verstehen, dass sich dann das Schaltelement und das weitere Bauelement mit der gleichen oder mit derselben Drehzahl und somit gemeinsam beziehungsweise gleichzeitig um die Drehachse relativ zu dem Getriebegehäuse drehen. Ausgehend von dieser Synchronität, bei der das Schaltelement beispielsweise reibschlüssig mit dem weiteren Bauelement gekoppelt ist, kann das Schaltelement eingelegt beziehungsweise durchgeschaltet und dadurch in formschlüssiges Zusammenwirken mit dem weiteren Bauelement gebracht werden. Würde beispielsweise zu einem Zeitpunkt, zu welchem es zu einer übermäßig starken Veränderung der Drehzahl des Rads und somit des Schaltelements kommt, insbesondere derart, dass der Wert beziehungsweise die Veränderung den Schwellenwert überschreitet, das Schaltelement eingelegt, so könnte es passieren, dass in dem Zeitraum zwischen der erreichten Synchronität und dem formschlüssigen Zusammenwirken des Schaltelements mit dem Bauelement zu einer ungewollten Asynchronität zwischen dem Schaltelement und dem weiteren Bauelement kommt.

Mit anderen Worten wurde gefunden, durch eine übermäßig starke Veränderung der Drehzahl des Rads und einer daraus resultierenden, übermäßig starken Veränderung der Drehzahl des Schaltelements kann es nach dem Erreichen der Synchronität zwischen dem Schaltelement und dem Bauelement und vor dem tatsächlichen Einlegen des Schaltelements zu einer Asynchronität, das heißt zu einer unerwünschten Verdrehung zwischen dem Schaltelement und dem Bauelement kommen. Dann können bei Einlegen des Schaltelements Schäden oder Geräusche entstehen, die als Kratz- oder Ratschgeräusche von sich im Innenraum des Fahrzeugs aufhaltenden Insassen wahrgenommen werden können. Wieder mit anderen Worten ausgedrückt führt ein Herstellen eines asynchronen Formschlusses zwischen dem Schaltelement und dem weiteren Bauelement zu Schaltkratzen und gegebenenfalls zu Bauteilschäden, insbesondere an dem Schaltelement und gegebenenfalls an dem Aktor. Die zuvor genannten Probleme und Nachteile können nun durch das erfindungsgemäße Verfahren vermieden werden. Durch Ermitteln und somit Berücksichtigen des Werts beziehungsweise der Veränderung der Drehzahl können kritische Fahrzustände, das heißt Sonderfahrzustände erkannt werden, und das Einlegen des Schaltelements kann zumindest vorübergehend verhindert werden.

Durch Einlegen des Schaltelements ist beziehungsweise wird beispielsweise ein Gang, insbesondere ein Vorwärtsfahrgang, des Getriebes einlegbar beziehungsweise eingelegt. Somit kann unter dem Merkmal, dass die das formschlüssige Zusammenwirken des Schaltelements mit dem weiteren Bauelement bewirkende Bewegung, das heißt das Einlegen des Schaltelements zumindest vorübergehend verhindert wird, verstanden werden, dass ein beziehungsweise das Einlegen des zuvor genannten Gangs zumindest vorübergehend verhindert wird. Hierdurch können akustisch auffällige Gangeinlegevorgänge und Bauteilschäden sicher vermieden werden.

Der Wert wird beispielsweise derart ermittelt, dass die Drehzahl des Rads ermittelt, insbesondere erfasst, wird, insbesondere mittels eines Drehzahlsensors. Die Drehzahl des Rads wird beispielsweise durch eine ABS-Regelung und/oder durch eine ESP-Regelung und/oder durch eine ASR-Regelung ermittelt, insbesondere erfasst (ABS - Anti-Blockier-System; ESP - Elektronisches Stabilitätsprogramm; ASR - Anti-Schlupf-Regelung). Beispielsweise stellt der Drehzahlsensor ein, insbesondere elektrisches, Signal bereit, welches mehrere, die Drehzahl des Rads charakterisierende Umdrehungswerte umfasst. Der Wert ist beispielsweise eine Differenz zwischen zumindest zwei der Umdrehungswerte, sodass beispielsweise die Veränderung der Drehzahl des Rads durch wenigstens eine Differenz zwischen wenigstens zwei der Umdrehungswerte charakterisiert wird.

Um einen besonders vorteilhaften Bauteilschutz realisieren sowie unerwünschte Geräusche besonders vorteilhaft vermeiden zu können, ist es bei einer Ausführungsform der Erfindung vorgesehen, dass das Rad drehmomentübertragend mit dem Getriebe gekoppelt ist. Hierdurch können übermäßig starke Veränderungen der Drehzahl des Rads zu übermäßig starken Veränderungen der Drehzahl des Schaltelements beziehungsweise einer Drehzahl eines Getriebeelements des Getriebes führen, wobei das Verfahren, aus solchen, übermäßig starken Veränderungen der Drehzahl resultierende, unerwünschte Effekte vermieden werden können.

Um Geräusche und Schäden besonders sicher vermeiden zu können, ist es in weiterer Ausgestaltung der Erfindung vorgesehen, dass während der Anti-Blockier-Bremsung wenigstens eine auch als Fahrgeschwindigkeit bezeichnete Geschwindigkeit, mit welcher sich das Fahrzeug während der Anti-Blockier-Bremsung entlang der Fahrbahn bewegt, ermittelt wird, wobei während der Anti-Blockier-Bremsung die das formschlüssige Zusammenwirken des Schaltelements mit dem weiteren Bauelement bewirkten Bewegung in Abhängigkeit von der ermittelten Geschwindigkeit verhindert wird.

Die Erfindung zeichnet sich dadurch aus, dass während der Anti-Blockier-Bremsung wenigstens ein das Bremsmoment charakterisierender Bremswert ermittelt wird, wobei während der Anti-Blockier-Bremsung die das formschlüssige Zusammenwirken des Schaltelements mit dem weiteren Bauelement bewirkende Bewegung in Abhängigkeit von dem ermittelten Bremswert und somit beispielsweise zumindest mittelbar in Abhängigkeit von dem Bremsmoment verhindert wird. Dadurch können ungünstige Sonderfahrzustände, in denen es zu übermäßig starken Veränderungen der Drehzahl des Rads und in der Folge zu Geräuschen und gegebenenfalls Schäden kommen kann, sicher identifiziert werden, sodass Geräusche und Schäden sicher vermieden werden können.

Beispielsweise charakterisiert der Bremswert einen Bremsdruck zu bewirken des Bremsmoments, sodass beispielsweise auf Basis der ermittelten beziehungsweise erfassten Drehzahl und auf Basis des Bremsdrucks beziehungsweise des Bremsmoments das Einlegen des Gangs zumindest temporär vermieden wird. Die Drehzahl beziehungsweise das die Drehzahl charakterisierende Signal und beispielsweise der Bremswert werden beispielsweise von einem Bremsensteuergerät bereitgestellt, mittels welchem die Bremseinrichtung betrieben, insbesondere geregelt wird.

Bei einer besonders vorteilhaften Ausführungsform der Erfindung umfasst das Fahrzeug einen Antriebsmotor, mittels welchem das Rad und dadurch das Fahrzeug und das Getriebe antreibbar sind. Somit handelt es sich bei dem Rad vorzugsweise um ein antreibbares beziehungsweise angetriebenes Rad. In der Folge können Geräusche und Schäden besonders gut vermieden werden.

Schließlich hat es sich als besonders vorteilhaft gezeigt, wenn während die das formschlüssige Zusammenwirken des Schaltelements mit dem weiteren Bauelement bewirkende Bewegung verhindert wird, ein Gang des Getriebes eingelegt ist und eingelegt gehalten wird. Mit anderen Worten, bei Erkennen einer kritischen Situation, in der ein Einlegen eines anderen Gangs zu Schäden und/oder Geräuschen führen könnte, wird das Einlegen dieses anderen Gangs vermieden beziehungsweise verhindert, und der aktuell eingelegte Gang wird gehalten. Ist der Sonderfahrzustand beendet, beispielsweise dann, wenn die Anti-Blockier-Bremsung beendet ist und/oder der Wert beziehungsweise die Drehzahl den Schwellenwert nicht (mehr) überschreitet, wird das Vermeiden der das formschlüssige Zusammenwirken des Schaltelements mit dem weiteren Bauelement bewirkenden Bewegung, das heißt das Vermeiden des Einlegens des Gangs aufgehoben, sodass in der Folge beispielsweise der aktuell eingelegte Gang ausgelegt und der andere Gang eingelegt werden kann, indem beispielsweise das Schaltelement aus der Entkoppelstellung in die Koppelstellung bewegt wird.

Ein zweiter Aspekt der Erfindung betrifft ein vorzugsweise als Kraftfahrzeug, insbesondere als Kraftwagen, ausgebildetes Fahrzeug, welches zum Durchführen eines erfindungsgemäßen Verfahrens gemäß dem ersten Aspekt der Erfindung ausgebildet ist. Vorteile und vorteilhafte Ausgestaltungen des ersten Aspekts der Erfindung sind als Vorteile und vorteilhafte Ausgestaltungen des zweiten Aspekts der Erfindung anzusehen und umgekehrt.

Zu der Erfindung gehören auch Weiterbildungen des erfindungsgemäßen Fahrzeugs, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Fahrzeugs hier nicht noch einmal beschrieben.

Das erfindungsgemäße Fahrzeug ist vorzugsweise als Kraftfahrzeug und bevorzugt als Kraftwagen, insbesondere als Personenkraftwagen oder Lastkraftwagen, oder als Personenbus oder Motorrad ausgestaltet.

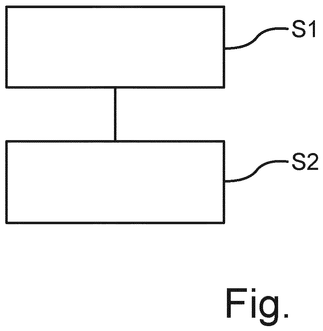

Im Folgenden ist ein Ausführungsbeispiel der Erfindung beschrieben. Hierzu zeigt die einzige Figur ein Flussdiagramm zum Veranschaulichen eines erfindungsgemäßen Verfahrens zum Betreiben eines Fahrzeugs während einer Fahrt des Fahrzeugs.

Bei dem im Folgenden erläuterten Ausführungsbeispiel handelt es sich um bevorzugte Ausführungsform der Erfindung.

Im Folgenden wird anhand der einzigen Figur ein Verfahren zum Betreiben eines Fahrzeugs erläutert. Das Fahrzeug ist vorzugsweise ein Kraftfahrzeug, insbesondere ein Kraftwagen, und weist mehrere Räder, ein Getriebe und wenigstens einen beispielsweise als Elektromotor oder Verbrennungskraftmaschine ausgebildeten Antriebsmotor auf. Die Räder sind über das Getriebe von dem Antriebsmotor antreibbar, wodurch das Kraftfahrzeug insgesamt antreibbar ist beziehungsweise angetrieben wird. Das Getriebe weist beispielsweise wenigstens zwei voneinander unterschiedliche Gänge auf, welche sich insbesondere im Hinblick auf ihre Übersetzungen voneinander unterscheiden. Der jeweilige Gang ist einlegbar und auslegbar. Das Fahrzeug weist außerdem eine Bremseinrichtung auf, mittels welcher die Räder und dadurch das Kraftfahrzeug insgesamt abgebremst werden können. Hierzu kann die Bremseinrichtung ein Bremsmoment auf das jeweilige Rad aufbringen.

Das Getriebe weist beispielsweise wenigstens eine Welle auf, welche um eine Drehachse relativ zu einem Getriebegehäuse des Getriebes drehbar ist. Auf der Welle ist beispielsweise ein als Losrad ausgebildetes Zahnrad angeordnet, welches beispielsweise ein Zahnrad eines ersten der Gänge ist. Dem Losrad ist ein beispielsweise als Schaltmuffe ausgebildetes und auch als Klauenkupplung bezeichnetes, formschlüssiges Schaltelement zugeordnet, welches beispielsweise auf der Welle angeordnet ist. Das Schaltelement ist mit der Welle um die Drehachse relativ zu dem Getriebegehäuse mitdrehbar und drehmomentübertragend, insbesondere drehfest, mit der Welle verbunden. Dabei kann das Schaltelement in axialer Richtung der Welle relativ zu der Welle, relativ zu dem Losrad und relativ zu dem Getriebegehäuse translatorisch aus wenigstens einer Entkoppelstellung in eine Koppelstellung bewegt werden. Das Losrad ist ein weiteres Bauelement des Getriebes beziehungsweise wird auch als weiteres Bauelement bezeichnet, wobei das Losrad eine beispielsweise als Kurzverzahnung ausgebildete Schaltverzahnung aufweist. Außerdem weist die Schaltmuffe eine mit der Schaltverzahnung korrespondierende, weitere Schaltverzahnung auf. In der Entkoppelstellung ist ein formschlüssiges Zusammenwirken der Schaltmuffe mit dem Losrad unverbunden beziehungsweise aufgehoben, sodass die Welle und die Schaltmuffe um die Drehachse relativ zu dem Losrad drehbar sind. In der Entkoppelstellung jedoch wirken die Schaltverzahnungen formschlüssig zusammen, indem die Schaltverzahnungen in Eingriff miteinander stehen. Hierdurch wirkt die Schaltmuffe mit dem Losrad formschlüssig zusammen, wodurch das Losrad über die Schaltmuffe drehmomentübertragend, insbesondere drehfest, mit der Welle gekoppelt ist. In der Folge können sich die Welle, die Schaltmuffe und das Losrad gemeinsam um die Drehachse relativ zu dem Getriebegehäuse drehen.

Um beispielsweise das Schaltelement (Schaltmuffe) aus der Entkoppelstellung in die Koppelstellung zu bewegen und hierdurch das Schaltelement in formschlüssiges Zusammenwirken mit dem Losrad (weiteres Bauelement) zu bewegen und in der Folge den ersten Gang einzulegen, ist beispielsweise ein Aktor vorgesehen, welcher Bestandteil des Getriebes sein kann. Der Aktor ist beispielsweise pneumatisch, hydraulisch oder elektrisch betreibbar beziehungsweise betätigbar und kann beispielsweise von einem Getriebesteuergerät angesteuert, insbesondere gesteuert oder geregelt, werden. Durch Ansteuern des Aktors wird beispielsweise mittels des Aktors das Schaltelement aus der Entkoppelstellung in die Koppelstellung bewegt.

Das zuvor genannte Verfahren wird beispielsweise während einer Fahrt durchgeführt, während welcher beispielsweise der zweite Gang eingelegt und der erste Gang ausgelegt ist. Ein Auslegen des zweiten Gangs und ein Einlegen des ersten Gangs wird auch als Gangwechsel bezeichnet. Während der Fahrt bewegt sich das Fahrzeug entlang einer Fahrbahn, an welcher das Fahrzeug in Fahrzeughochrichtung nach unten über die Räder abstützbar oder abgestützt ist. Während der Fahrt wird mittels der Bremseinrichtung des Fahrzeugs eine Anti-Blockier-Bremsung durchgeführt, bei welcher mittels einer elektronischen Regelungseinrichtung des Fahrzeugs das von der Bremseinrichtung auf das jeweilige Rad aufzubringende Bremsmoment zum Abbremsen des jeweiligen Rads zumindest zeitweise auf einen vorgebbaren Wert begrenzt wird, um dadurch ein Blockieren des jeweiligen Rads relativ zu der Fahrbahn zumindest zeitweise zu verhindern.

Um nun unerwünschte Geräusche sowie Schäden sicher vermeiden zu können, umfasst das Verfahren einen ersten Schritt S1, bei welchem während der Anti-Blockier-Bremsung, das heißt während die Anti-Blockier-Bremsung durchgeführt wird, wenigstens ein Wert, insbesondere mittels einer elektronischen Recheneinrichtung des Kraftfahrzeugs, ermittelt wird. Der Wert charakterisiert eine während der Anti-Blockier-Bremsung stattfindende Veränderung einer Drehzahl des jeweiligen Rads, welche zumindest während der Anti-Blockier-Bremsung drehmomentübertragend mit dem Getriebe und dabei beispielsweise mit der Welle und somit mit dem Schaltelement gekoppelt ist. Somit würde eine übermäßig starke Veränderung der Drehzahl des Rads zu einer übermäßig starken Veränderung einer Drehzahl des Schaltelements führen, welches sich mit seiner Drehzahl um die Drehachse relativ zu dem Getriebegehäuse dreht.

Um die Anti-Blockier-Bremsung durchzuführen, ermittelt, insbesondere erfasst, beispielsweise ein Drehzahlsensor die Drehzahl des Rads. Der Drehzahlsensor stellt ein die mittels des Drehzahlsensors erfasste Drehzahl des Rads charakterisierendes, insbesondere elektrisches, Signal, bereit, welches beispielsweise von der auch als Bremsensteuergerät bezeichneten Regelungseinrichtung empfangen wird. Alternativ oder zusätzlich wird das Signal von der elektronischen Recheneinrichtung empfangen, welche das Bremsensteuergerät oder das Getriebesteuergerät sein kann. Der die Veränderung der Drehzahl charakterisierende Wert wird beispielsweise mittels der elektronischen Recheneinrichtung, insbesondere mittels der Regelungseinrichtung und/oder mittels des Getriebesteuergeräts in Abhängigkeit von dem Signal beziehungsweise in Abhängigkeit von der mittels des Drehzahlsensors erfassten Drehzahl ermittelt, insbesondere berechnet oder erfasst.

Bei einem zweiten Schritt S2 des Verfahrens wird, insbesondere mittels der elektronischen Recheneinrichtung, in Abhängigkeit von dem ermittelten Wert eine beziehungsweise die grundsätzlich mögliche und beispielsweise mittels des Aktors bewirkbare und das formschlüssige Zusammenwirken des Schaltelements mit dem weiteren Bauelement bewirkende Bewegung des Schaltelements zumindest vorübergehend aktiv beziehungsweise gezielt verhindert, insbesondere obwohl beispielsweise das Getriebesteuergerät die mittels des Aktors zu bewirkende, das formschlüssige Zusammenwirken des Schaltelements (Schaltmuffe) mit dem weiteren Bauelement (Losrad) bewirkende Bewegung des Schaltelements anfordert. Ist die elektronische Recheneinrichtung beispielsweise das Bremsensteuergerät, so verhindert nun jedoch das Bremsensteuergerät die von dem Getriebesteuergerät gewünschte Bewegung des Schaltelements aus der Entkoppelstellung in die Koppelstellung. Hierdurch wird der zuvor genannte Gangwechsel vermieden. Mit anderen Worten wird hierdurch vermieden, dass beispielsweise der erste Gang eingelegt wird, während es zu einer übermäßig starken Veränderung der Drehzahl des Rads und somit der Drehzahl des Schaltelements kommt. Dadurch kann ein asynchroner Formschluss zwischen dem Schaltelement und dem weiteren Bauelement vermieden werden, wodurch übermäßige Belastungen des Getriebes, Schäden des Fahrzeugs, insbesondere Getriebes sowie unerwünschte, übermäßige Geräusche verhindert werden können. Wird beispielsweise ermittelt, dass der ermittelte Wert einen beispielsweise vorgegebenen oder vorgebbaren Schwellenwert überschreitet, so wird dadurch ermittelt, dass aktuell ein auch als Sonderfahrsituation bezeichneter Sonderfahrzustand des Fahrzeugs vorliegt. Mittels des Verfahrens kann somit vermieden werden, dass es in dieser Sonderfahrsituation zu einer übermäßigen Veränderung der Drehzahl des Schaltelements kommt, wodurch Schäden und/oder Geräusche vermieden werden können.

Ferner ist es denkbar, dass die elektronische Recheneinrichtung das Getriebesteuergerät ist. In dem Getriebesteuergerät sind beispielsweise unterschiedliche Softwareblöcke aktiv, mittels welchen jeweilige Funktionen des Getriebe bewirkbar sind. Einer der Softwareblöcke ist beispielswese grundsätzlich zuständig für ein Ermitteln und Bewirken des zuvor beschrieben Gangwechsels beziehungsweise des Einlegens des ersten Gangs. Ermittelt beispielsweise der eine Softwareblock den Gangwechsel, so fordert beispielsweise dieser Softwareblock den Gangwechsel an, insbesondere von einem anderen der Softwareblock, welche dann entsprechend den Aktor steuert, oder der eine Softwareblock steuert den Aktor an, um den ermittelten Gangwechsel zu bewirken. Im Rahmen des Verfahrens kann vorgesehen sein, dass das Verhindern der das formschlüssige Zusammenwirken des Schaltelements mit dem weiteren Bauelement bewirkenden Bewegung des Schaltelements in dem Getriebesteuergerät beziehungsweise mittels des Getriebesteuergeräts erfolgt. Hierbei wird beispielsweise der eine Softwareblock und/oder der andere Softwareblock deaktiviert, sodass beispielsweise schon die von dem einen Softwareblock bereitstellbare Anforderung des Gangwechsels verhindert wird. In den einen Softwareblock selbst wird nicht eingegriffen, da dieser für andere, normale Fahrsituationen den Gangwechsel entsprechend anfordern beziehungsweise bewirken darf und soll. In der vorliegenden Sonderfahrsituation wird die Anforderung des Gangwechsels blockiert. Mit anderen Worten wird beispielsweise blockiert, dass die von dem einen Softwareblock gestellte Anforderung zu dem Gangwechsel führt. Insbesondere wird der Gangwechsel solange blockiert, bis die vorliegende Sonderfahrsituation vorüber ist.

## Patentansprüche

1. Verfahren zum Betreiben eines ein Getriebe und eine Bremseinrichtung aufweisenden Fahrzeugs während einer Fahrt, während welcher sich das Fahrzeug, dessen Getriebe wenigstens ein formschlüssiges Schaltelement umfasst, entlang einer Fahrbahn bewegt, wobei während der Fahrt des Kraftfahrzeugs, dessen Schaltelement in formschlüssiges Zusammenwirken mit wenigstens einem weiteren Bauelement bewegbar ist, mittels der Bremseinrichtung eine Anti-Blockier-Bremsung durchgeführt wird, bei welcher mittels einer Regelungseinrichtung des Fahrzeugs wenigstens ein von der Bremseinrichtung auf wenigstens ein Rad des Fahrzeugs aufzubringendes Bremsmoment zum Abbremsen des Rads zumindest zeitweise auf einen vorgebbaren Wert begrenzt wird, um dadurch ein Blockieren des Rads relativ zur Fahrbahn zumindest zeitweise zu verhindern, wobei
während der Anti-Blockier-Bremsung:
- wenigstens ein eine Veränderung einer Drehzahl des Rads charakterisierender Wert ermittelt wird (Schritt S1), und
- in Abhängigkeit von dem Wert eine das formschlüssige Zusammenwirken des Schaltelements mit dem weiteren Bauelement bewirkende Bewegung des Schaltelements zumindest vorübergehend verhindert wird (Schritt S2),
**dadurch gekennzeichnet, dass**
- während der Anti-Blockier-Bremsung wenigstens ein das Bremsmoment charakterisierender Bremswert ermittelt wird, wobei während der Anti-Blockier-Bremsung die das formschlüssige Zusammenwirken des Schaltelements mit dem weiteren Bauelement bewirkende Bewegung in Abhängigkeit von dem ermittelten Bremswert verhindert wird.

2. Verfahren nach Anspruch 1,
**dadurch gekennzeichnet, dass**
das Rad drehmomentübertragend mit dem Getriebe gekoppelt ist.

3. Verfahren nach Anspruch 1 oder 2,
**dadurch gekennzeichnet, dass**
während der Anti-Blockier-Bremsung wenigstens eine Geschwindigkeit, mit welcher sich das Fahrzeug während der Anti-Blockier-Bremsung entlang der Fahrbahn bewegt, ermittelt wird, wobei während der Anti-Blockier-Bremsung die das formschlüssige Zusammenwirken des Schaltelements mit dem weiteren Bauelement bewirkende Bewegung in Abhängigkeit von der ermittelten Geschwindigkeit verhindert wird.

4. Verfahren nach einem der vorhergehenden Ansprüche,
**dadurch gekennzeichnet, dass**
das Fahrzeug einen Antriebsmotor aufweist, mittels welchem das Rad und dadurch das Fahrzeug über das Getriebe antreibbar sind.

5. Verfahren nach einem der vorhergehenden Ansprüche,
**dadurch gekennzeichnet, dass**
während die das formschlüssige Zusammenwirken des Schaltelements mit dem weiteren Bauelement bewirkende Bewegung verhindert wird, ein Gang des Getriebes eingelegt ist und eingelegt gehalten wird.

6. Fahrzeug aufweisend:
- ein Getriebe mit einem formschlüssigen Schaltelement, eine Bremseinrichtung und ein Rad, welches mittels der Bremseinrichtung abbremsbar ist, wobei das Schaltelement translatorisch zwischen einer Koppelstellung und einer Entkoppelstellung bewegbar ist und
- einer elektronischen Steuereinheit, welche eingerichtet ist,
- ein Verfahren nach einem der vorhergehenden Ansprüche auszuführen.

## Claims

1. Method for operating a vehicle having a transmission and a braking device during a journey, during which the vehicle, the transmission of which comprises at least one form-fitting shifting element, moves along a carriageway, wherein, during the journey of the motor vehicle, the shifting element of which is movable in form-fitting interaction with at least one further structural element, anti-lock braking is carried out by means of the braking device, in which, by means of a control device of the vehicle, at least one braking torque to be applied to at least one wheel of the vehicle by the braking device in order to brake the wheel is at least temporarily limited to a predeterminable value in order thereby to at least temporarily prevent locking of the wheel relative to the carriageway, wherein, during the anti-lock braking:
- at least one value characterizing a change in a rotational speed of the wheel is determined (step S1), and
- depending on the value a movement of the shifting element that brings about the form-fitting interaction of the shifting element with the further structural element is at least temporarily prevented (step S2),
**characterized in that**
- during the anti-lock braking, at least one braking value characterizing the braking torque is determined, wherein, during the anti-lock braking, the movement bringing about the form-fitting interaction of the shifting element with the further structural element is prevented depending on the determined braking value.

2. Method according to Claim 1,
**characterized in that**
the wheel is coupled torque-transmittingly to the transmission.

3. Method according to Claim 1 or 2,
**characterized in that**,
during the anti-lock braking, at least one speed at which the vehicle moves along the carriageway during the anti-lock braking is determined, wherein, during the anti-lock braking, the movement bringing about the form-fitting interaction of the shifting element with the further structural element is prevented depending on the determined speed.

4. Method according to one of the preceding claims,
**characterized in that**
the vehicle has a drive motor, by means of which the wheel and thereby the vehicle can be driven via the transmission.

5. Method according to one of the preceding claims,
**characterized in that**,
while the movement bringing about the form-fitting interaction of the shifting element with the further structural element is prevented, a gear of the transmission is engaged and kept engaged.

6. Vehicle having:
- a transmission with a form-fitting shifting element, a braking device and a wheel, which can be braked by means of the braking device, wherein the shifting element is movable translationally between a coupling position and a decoupling position, and
- an electronic control unit, which is designed
- to carry out a method according to one of the preceding claims.

## Revendications

1. Procédé de fonctionnement d'un véhicule, comportant une transmission et un dispositif de freinage, au cours d'un déplacement pendant lequel le véhicule, dont la transmission comprend au moins un élément de commutation à complémentarité de formes, se déplace le long d'une chaussée, pendant le déplacement du véhicule automobile, dont l'élément de commutation est mobile en coopération par complémentarité de formes avec au moins un autre composant, le dispositif de freinage réalisant un freinage antiblocage dans lequel un dispositif de régulation du véhicule limite au moins un couple de freinage, que le dispositif de freinage applique sur au moins une roue du véhicule afin de freiner la roue, au moins temporairement à une valeur spécifiée afin d'empêcher au moins temporairement le blocage de la roue par rapport à la chaussée,
lors du freinage antiblocage :
- au moins une valeur caractérisant une variation de la vitesse de rotation de la roue étant déterminée (étape S1), et
- en fonction de la valeur, un mouvement de l'élément de commutation, qui provoque la coopération par complémentarité de formes de l'élément de commutation avec l'autre composant, étant empêché au moins temporairement (étape S2),
**caractérisé en ce que**
- pendant le freinage antiblocage, au moins une valeur de freinage caractérisant le couple de freinage étant déterminée, le mouvement qui provoque la coopération par complémentarité de formes de l'élément de commutation avec l'autre composant étant empêché pendant le freinage antiblocage en fonction de la valeur de freinage déterminée.

2. Procédé selon la revendication 1, **caractérisé en ce que** la roue est accouplée à la transmission de manière à transmettre un couple.

3. Procédé selon la revendication 1 ou 2, **caractérisé en ce qu'**au moins une vitesse, à laquelle le véhicule se déplace sur la chaussée pendant le freinage antiblocage, est déterminée pendant le freinage antiblocage, le mouvement qui provoque la coopération par complémentarité de formes de l'élément de commutation avec l'autre composant étant empêché pendant le freinage antiblocage en fonction de la vitesse déterminée.

4. Procédé selon l'une des revendications précédentes, **caractérisé en ce que** le véhicule comporte un moteur d'entraînement qui entraîne la roue et donc le véhicule par le biais de la transmission.

5. Procédé selon l'une des revendications précédentes, **caractérisé en ce que**, pendant que le mouvement qui provoque la coopération par complémentarité de formes de l'élément de commutation avec l'autre composant est empêché, un rapport de la transmission est engagé et est maintenu en engagement.

6. Véhicule comportant :
- une transmission pourvue d'un élément de commutation à complémentarité de formes, un dispositif de freinage et une roue qui peut être freinée au moyen du dispositif de freinage, l'élément de commutation étant mobile en translation entre une position d'accouplement et une position de désaccouplement et
- une unité de commande électronique qui est conçue pour mettre en oeuvre un procédé selon l'une des revendications précédentes.
